# DEMANDE DE BREVET EUROPEEN

(11) **EP 1 361 119 A1**
(43) Date de publication de la demande: **12.11.2003**
(21) Numéro de dépôt: 03291068.9
(22) Date de dépôt: 02.05.2003
(51) Int. Cl.: B60R 21/045

(54) **Dispositif passif de protection et véhicule ainsi équipé**

(30) Priorité: 07.05.2002 FR 0205700
(71) Demandeur: Faurecia Interieur Industrie, 92735 Nanterre (FR)
(72) Inventeur: Laborie, Jean-Michel, c/o Faurecia Interieur Ind., 60114 Meru Cedex (FR); De Weduwe, Sonia, c/o Faurecia Interieur Ind., 60114 Meru Cedex (FR); Gobier, Stéphane, 75015 Paris (FR)
(74) Mandataire: Arnaud, Jean Pierre Alfred

(57) **Abrégé**

Dispositif pour protéger les membres inférieurs d'un occupant de véhicule automobile, le dispositif comprenant une structure d'absorption d'énergie présentant deux éléments (51,53) absorbeurs se déformant sensiblement suivant la direction principale (3) d'application de l'effort, et coopérant avec un élément d'appui frontal (31) s'étendant transversalement à la direction principale d'application de l'effort, cet élément d'appui frontal présentant, ou coopérant avec, un renflement (43) qui est convexe vers l'occupant, au moins en l'absence d'effort exercé, le renflement étant situé entre les deux éléments absorbeurs d'énergie, pour obliger les membres inférieurs de l'occupant à présenter entre eux un écartement minimum lors de la déformation de la structure d'absorption d'énergie

## Description

L'invention concerne un dispositif pour protéger les membres inférieurs d'un occupant d'un véhicule automobile.

L'invention concerne également un véhicule équipé d'un tel dispositif.

Pour protéger les membres inférieurs d'un occupant de véhicule, il a déjà été proposé d'utiliser un système à coussin gonflable (typiquement dénommé "air-bag").

L'invention ne prévoit pas l'utilisation de coussin gonflable pour assurer la protection de ces membres inférieurs, mais au contraire d'un système de protection passif pourvu d'au moins une structure d'absorption d'énergie travaillant « par déplacement », en se déformant.

Dans ce contexte, le problème qui se pose concerne la position que doivent adopter les membres inférieurs de l'occupant pour que ceux-ci soient correctement placés vis-à-vis de la structure d'absorption d'énergie et dirigés afin de limiter le risque de bris du membre ou autre dommage sérieux.

Ceci est en particulier vrai dans le cas du conducteur du véhicule, dès lors que sensiblement entre ses jambes se trouve la colonne de direction.

Il s'agit donc ici de favoriser un positionnement correct des membres inférieurs de l'occupant, lorsqu'un élément ou un organe du véhicule situé face à lui risque d'entraîner, en partie centrale, un positionnement inapproprié de ces membres.

Une solution proposée consiste en ce que le dispositif passif de protection comprenne deux éléments absorbeurs d'énergie se déformant sensiblement selon la direction principale d'application de l'effort (lors du choc) pour absorber (une partie au moins de) son énergie, les deux éléments absorbeurs d'énergie étant écartés l'un de l'autre, perpendiculairement à la direction principale d'application de l'effort, et présentant chacun frontalement une première extrémité proche de l'occupant, face à laquelle est disposée une partie d'au moins un élément d'appui frontal s'étendant transversalement à la direction principale d'application de l'effort, cet élément d'appui frontal présentant, ou coopérant avec, un renflement qui est convexe vers l'occupant, au moins en l'absence d'effort exercé, le renflement étant situé entre les deux éléments absorbeurs d'énergie, pour obliger les membres inférieurs de l'occupant à présenter entre eux un écartement minimum lors de la déformation de la structure d'absorption d'énergie.

On peut faire ainsi compact et léger.

Pour contrôler le mouvement effectif des membres inférieurs de l'occupant lors du choc (choc ici supposé appliqué sensiblement suivant l'axe d'avance du véhicule, à l'avant ou à l'arrière de celui-ci), il s'est avéré qu'un écartement trop important des jambes de l'occupant risque de conduire à un mauvais positionnement de celles-ci lors du choc, vis-à-vis de la structure d'absorption d'énergie.

Aussi, une caractéristique de l'invention conseille-t-elle que les deux éléments absorbeurs d'énergie présentent chacun un axe principal de poussée dirigé sensiblement parallèlement à la direction principale d'application de l'effort, la distance séparant ces deux axes étant supérieure à environ 240 mm, à 10 % près.

En particulier dans le cas où cette sécurité passive est appliquée au conducteur du véhicule et est donc située dans l'environnement de la colonne de direction, cette dernière peut constituer un "point résistant" trop important en conditions extrêmes.

Aussi, conseille-t-on que l'élément d'appui frontal relie entre eux les deux éléments absorbeurs d'énergie et soit mécaniquement affaibli entre les deux éléments absorbeurs, pour plier à cet endroit lors de l'application de l'effort sur lui.

Ainsi, cet élément d'appui frontal pourra "s'enrouler" autour de la colonne de direction, notamment à l'endroit du renflement précité si l'affaiblissement y est ménagé, même si l'on conseille d'éviter le plus possible que l'élément d'appui frontal vienne au contact de la colonne de direction lors d'un choc.

On notera par ailleurs que le fait de lier entre eux les deux éléments "latéraux" absorbeurs d'énergie augmente la cohésion d'ensemble du dispositif et permet de maintenir une efficacité importante en termes d'absorption d'énergie, même si l'effort (ou la direction suivant laquelle les membres inférieurs de l'occupant viennent au contact du dispositif) vient de biais par rapport à l'axe longitudinal d'avance du véhicule (l'écart angulaire pouvant atteindre 30°).

En particulier dans le cas d'une telle liaison entre les deux éléments latéraux absorbeurs d'énergie, et d'autant plus si l'élément d'appui est mécaniquement affaibli entre eux, une autre caractéristique de l'invention conseille que cet élément d'appui frontal se déforme et/ou s'articule alors que les éléments absorbeurs d'énergie se déforment eux-mêmes, pour créer entre ces éléments absorbeurs d'énergie, et de part et d'autre du renflement , deux berceaux pour y recevoir alors une partie des membres inférieurs de l'occupant.

On remarquera au demeurant l'intérêt d'une telle caractéristique de déformation et/ou d'articulation de l'élément d'appui frontal, lorsque la distance précitée d'environ 240 mm entre les axes principaux de poussée précités est respectée, puisqu' alors on s'assure que les membres inférieurs sont a priori ni trop, ni trop peu, écartés et que par conséquent ils puissent être dirigés précisément à l'écart de zones dures, mécaniquement résistantes (colonne de direction, boîte à fusibles, panneau central de commande de la planche de bord, en particulier ...).

Dans une autre configuration envisagée, il a été prévu que l'élément d'appui frontal, qui est à nouveau prévu pour relier entre eux les deux éléments absorbeurs d'énergie, soit métallique, déformable et soit déformé pendant l'effort, de telle sorte qu'il soit plus plat après l'effort qu'avant l'effort.

Dans ce cas, on conseille que le renflement convexe précité soit localement affaibli mécaniquement (pour s'applatir lors du choc, consécutivement à l'appui exercé par les membres inférieurs de l'occupant) et/ou qu'à l'endroit des deux éléments latéraux absorbeurs d'énergie, il y ait une possibilité de déplacement (glissement) de l'élément d'appui frontal, voire d'articulation (pliure) de celui-ci.

Eventuellement en relation avec ce qui précède, et plus généralement pour favoriser au mieux le contrôle directionnel des membres inférieurs de l'occupant pendant la période d'application de l'effort consécutivement au choc, on conseille que, transversalement à la direction principale d'application de cet effort, l'élément d'appui frontal s'étende au delà des éléments absorbeurs d'énergie. Ainsi, les membres inférieurs de l'occupant continueront à rencontrer une zone du dispositif passif de protection, de part et d'autre des éléments absorbeurs d'énergie, ceci pouvant en particulier survenir si les jambes de l'occupant sont nettement plus écartées que la position normale dans laquelle ils sont censés se trouver.

Un autre problème que l'invention a pris en compte concerne la possibilité d'assurer une distance de déplacement d'une partie au moins de la structure d'absorption d'énergie qui soit relativement importante, sous un effort constant, avec des conditions de fiabilité, d'efficacité et de coûts optimisées, tout en assurant à l'élément d'appui frontal une stabilité lors de ce déplacement consécutivement au choc, sans avoir nécessairement à recourir à un guidage latéral articulé, par exemple sous la forme de poutres ou de barres mobiles.

C'est pour atteindre cet objectif qu'une caractéristique de l'invention prévoit que la structure d'absorption d'énergie puisse comprendre au moins une structure en nids d'abeilles définissant des cellules allongées s'étendant parallèlement les unes aux autre, dans une direction transversale à la direction principale d'application de l'effort.

Ainsi, on peut obtenir un déplacement important avec un effort constant.

En relation avec ce qui précède, et même si une telle structure en nids d'abeilles n'est pas utilisée, une autre caractéristique de l'invention conseille que l'un au moins des éléments absorbeurs d'énergie puisse présenter une première base frontale de section inférieure à une seconde base dorsale, la première base frontale faisant face aux membres de l'occupant du véhicule, la seconde base dorsale étant située à l'opposé.

Dans ce cas, la seconde base dorsale stabilise angulairement la structure d'absorption d'énergie, quand bien même l'application des efforts est désaxée par rapport à l'axe longitudinal d'avance du véhicule.

Lors des réflexions menées dans le cadre de l'invention, il a été noté que l'on renforçait encore l'efficacité du dispositif passif de protection dans le cas où :
-- l'élément d'appui frontal est situé sensiblement face aux genoux de l'occupant, et
-- le dispositif comprend en outre un élément additionnel d'appui frontal s'étendant plus bas que le premier élément d'appui frontal, face aux tibias de l'occupant.

A noter que les deux caractéristiques suivantes sont également conseillées, en alternative ou en combinaison :
-- le premier élément d'appui frontal se présente comme une poutre tubulaire (creuse) ou comme une barre et l'élément additionnel d'appui frontal se présente comme une plaque, de sorte que l'élément additionnel d'appui frontal présente une surface d'appui pour les membres inférieurs plus importante que celle du premier élément d'appui,
-- les premier et second éléments d'appui frontaux sont dimensionnés pour que le premier élément d'appui frontal absorbe, lors de l'application de l'effort, entre environ trois et huit fois l'effort absorbé par l'élément additionnel d'appui frontal (à 10% près).

Ainsi, il est possible d'assurer au mieux la protection des membres, en répartissant cet effort entre les genoux et les tibias, éventuellement en "chargeant" un peu les tibias, sans toutefois augmenter le risque pour l'occupant (la charge est toujours essentiellement supportée sensiblement au niveau des genoux). Les normes de « charges corporelles » sont en outre respectées.

En ce qui concerne la réalisation de l'élément additionnel d'appui, on notera encore qu'avantageusement :
-- il renforce localement et mécaniquement la planche de bord du véhicule concerné,
-- et/ou il intègre des parois déformables orientées sensiblement parallèlement à la direction principale d'application de l'effort, et qui, en se déformant sous l'effort, absorbent une partie au moins de l'énergie développée par celui-ci.

En ce qui concerne maintenant la zone d'implantation du dispositif de protection de l'invention, on notera que les éléments absorbeurs d'énergie associés au (premier) élément d'appui frontal seront situés derrière la planche de bord par rapport à l'occupant.

Quant à cet élément frontal d'appui en lui-même, on conseille qu'il soit distinct de la (des) couche(s) de la planche de bord et soit donc situé également derrière elle(s).

Ceci permettra en particulier de réaliser cet élément à la manière d'une poutre ou d'une barre.

Par contre, si l'on a prévu d'utiliser l'élément additionnel d'appui pour les tibias, celui-ci sera alors de préférence réalisé comme une plaque située, perpendiculairement la direction principale d'application de l'effort, au niveau de la planche de bord ou derrière elle par rapport à l'occupant, et, en hauteur, sous le premier élément d'appui frontal et en dessous du niveau où sont situés les éléments absorbeurs d'énergie.

La réalisation en plaque permet en effet d'intégrer cet élément additionnel aux couches de la planche de bord ou au contraire de le disposer à l'arrière, l'effet de répartition de l'effort sur la surface de la plaque étant obtenu dans un cas comme dans l'autre.

Par contre, on conseille dans les deux cas que cet élément additionnel d'appui intègre des parois déformables orientées sensiblement perpendiculairement à la direction principale d'application de l'effort, et qui, en se déformant sous l'effort, absorbent une partie au moins de l'énergie développée par celui-ci.

Une telle réalisation allie efficacité et coût réduit.

Dans ce qui précède, on a à un moment fait référence à l'utilisation de bras articulés pour stabiliser le dispositif de protection de l'invention et assurer une absorption favorable de l'effort.

Dans cette hypothèse, on conseille alors que les deux éléments absorbeurs d'énergie comprennent chacun une poutre liée à une première extrémité supérieure à l'élément d'appui frontal et articulée, à une seconde extrémité inférieure, transversalement à la direction d'application de l'effort et sensiblement horizontalement, à une bride de fixation fixée rigidement à une traverse de renfort mécanique de la planche de bord à laquelle la planche de bord est fixée et qui s'étend à l'intérieur du véhicule, sensiblement parallèlement à l'élément d'appui frontal et entre les piliers « A » de ce véhicule.

Une description encore plus détaillée de l'invention va maintenant être fournie en référence aux dessins annexés dans lesquels :
-- sur la figure 1, on voit en éclaté un certain nombre d'éléments de structure et/ou d'habillage d'un véhicule automobile,
-- sur les figures 2 et 3, on voit un principe de fonctionnement d'un système de sécurité passif avant choc et après choc, respectivement,
-- la figure 4 illustre en vue agrandie une réalisation possible de l'élément d'appui frontal qui reçoit les genoux de l'occupant,
-- les figures 5 et 6 montrent schématiquement, en vue de dessus, une déformation de cet élément d'appui frontal, comme déjà montré sur les figures 2 et 3,
-- la figure 7 montre, vu d'arrière, l'élément d'appui frontal localement affaibli avec deux poutres latérales d'absorption d'énergie,
-- la figure 8 montre en perspective une variante de réalisation de la zone d'absorption d'énergie, autour de la colonne de direction,
-- les figures 9 et 10 montrent schématiquement, vu de côté, le fonctionnement du système de sécurité de la figure 8,
-- la figure 11 montre une plaque de protection pour tibias,
-- les figures 12 et 13 montrent schématiquement, en coupe verticale, une planche de bord équipée des systèmes de protection pour genoux et tibias, selon un mode de réalisation de l'invention,
-- et la figure 14 illustre une variante de réalisation dans laquelle on montre un élément absorbeur d'énergie ayant une surface arrière d'appui plus importante que sa surface frontale.

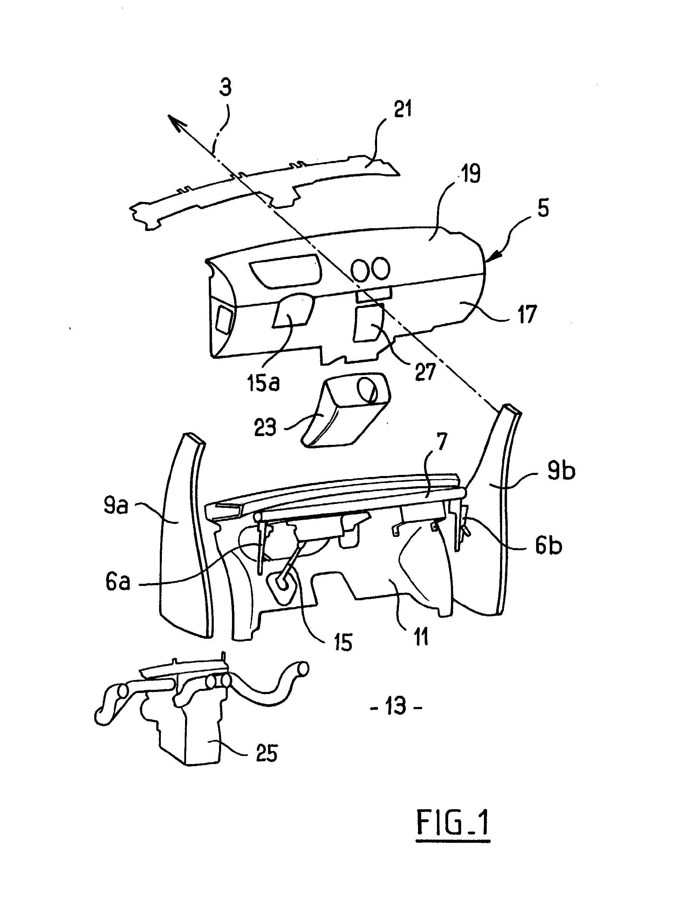

La figure 1 montre donc différents éléments essentiels d'une planche de bord 5, laquelle planche de bord est fixée rigidement et latéralement, par des pattes 6a, 6b à une traverse 7 s'étendant perpendiculairement à l'axe 3 (direction longitudinale d'avance du véhicule sur lequel la planche de bord est montée) et dont le rôle est, comme connu en soi, de participer à la rigidification du véhicule à l'endroit de la planche de bord, en assurant une fixation solide pour cette planche de bord.

La traverse 7 (également dénommée "cross beam") est fixée latéralement aux piliers « A », 9a, 9b du véhicule et/ou au tablier frontal 11 qui sépare classiquement le compartiment moteur (situé à l'avant) de l'habitacle 13 où se situent les occupants du véhicule.

En 15, on a schématisé une partie de la colonne de direction qui est fixée à la traverse 7.

La planche de bord 5 comprend en particulier un corps de planche de bord 17 surmontée d'une coiffe 19 à laquelle se raccorde à l'endroit du pare-brise (non représenté) un panneau de frise 21.

L'emplacement 15a figure le passage à l'endroit duquel la colonne de direction 15 passe à travers le corps de planche de bord.

En 23, sont figurées les coquilles supérieure et inférieure qui entourent la partie visible depuis le cockpit de la colonne de direction, à l'endroit du passage 15a.

Le groupe de climatisation est schématisé en 25 et est engagé derrière le panneau central de commande 27 de la planche de bord.

Dans ce qui suit, on a privilégié l'application de l'invention à la protection du conducteur.

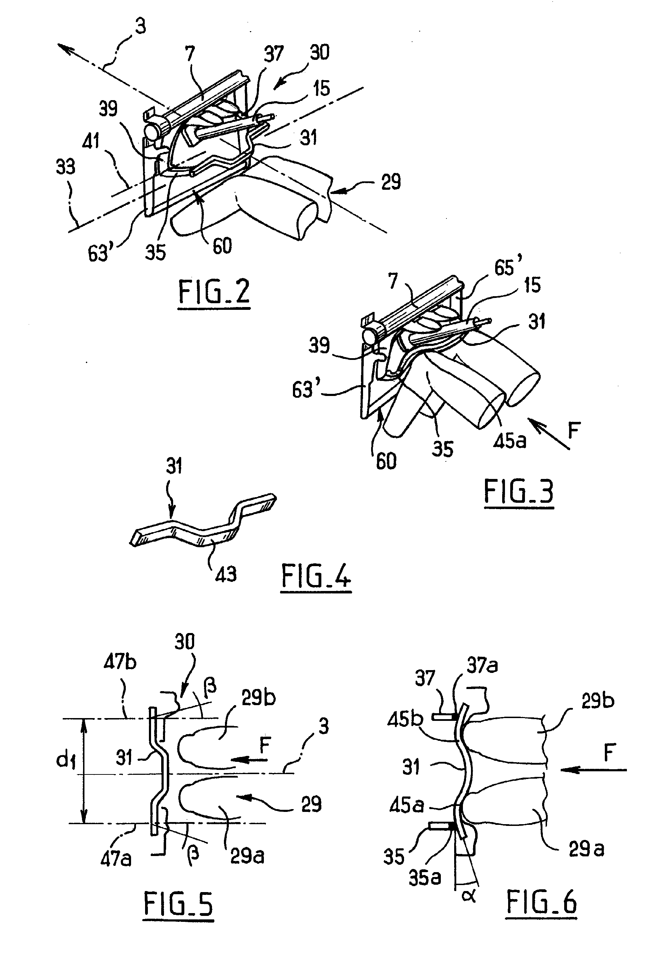

Ainsi, par exemple sur les figures 2 et 3, on a repéré en 29 les membres inférieurs de ce conducteur disposés en face de la colonne de direction 15.

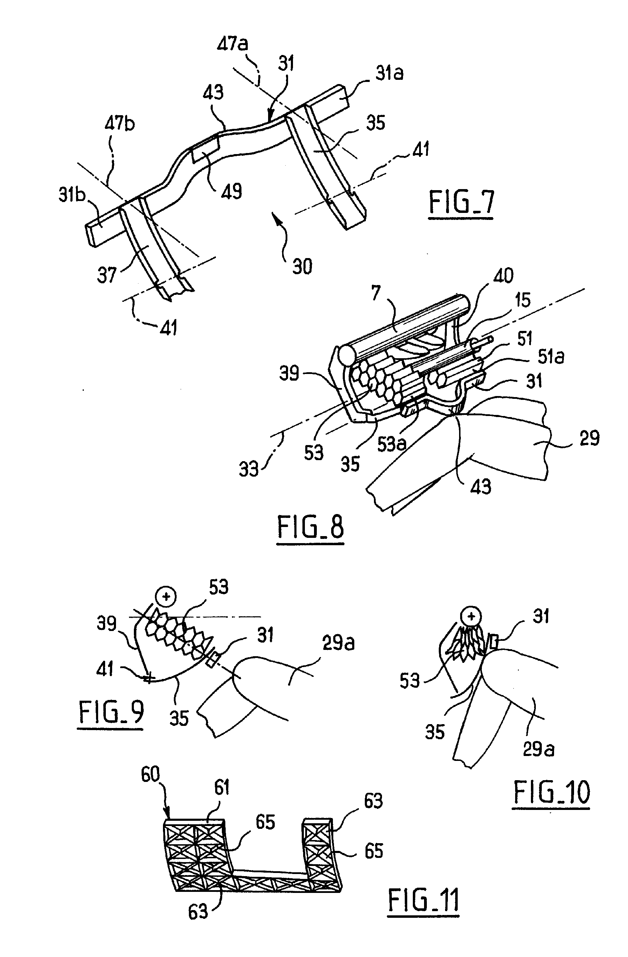

Dans cette réalisation, le dispositif de protection comprend un élément d'appui frontal 31 allongé suivant une direction 33 transversale à l'axe longitudinal 3 et a priori horizontale, ainsi que deux poutres ou barreaux articulées 35, 37 auxquels l'élément d'appui frontal 31 est fixé vers ses extrémités latérales, les deux poutres 35, 37 étant elles-mêmes fixées à une deuxième extrémité à des bras (ou brides) rigides et fixes de reprise d'effort 39,40 (voir figure 8), les deux bras étant eux-mêmes fixés rigidement à la poutre transversale 7.

Ainsi, l'élément d'appui frontal 31 relie de préférence entre elles les poutres latérales 35, 37. Ceci favorise la répartition contrôlée et l'équilibrage de l'effort lors du choc.

Typiquement, les pièces 31, 35, 37 et 39 seront métalliques et c'est par articulation à l'endroit de leur liaison avec chaque bras, tel que 39, que les poutres 35, 37 absorberont l'énergie, en cas de choc sensiblement parallèlement à l'axe 3, ainsi qu'on peut le constater sur la figure 3 (état du dispositif après le choc), l'axe d'articulation entre les poutres et les bras étant ici sensiblement parallèle à la direction 33, tel que cela est figuré par l'axe d'articulation 41, à l'endroit de la liaison entre la poutre 35 et le bras 39.

Plutôt qu'une forme cintrée (avec une convexité tournée vers l'occupant), les poutres 35, 37, qui sont avantageusement disposées sensiblement verticalement, ou du moins sont avantageusement disposées pour pivoter dans des plans sensiblement verticaux, pourraient présenter une forme sensiblement en oméga (p).

Il peut s'agir de profilés en « U », en acier.

Sur la figure 4, on peut constater que l'élément d'appui frontal 31 comprend en partie intermédiaire (centrale) un renflement 43 orienté avec une convexité dirigée vers l'occupant assis dans l'habitacle.

L'élément 31 peut en particulier consister en un tube métallique cintré, de section rectangulaire.

Sur les figures 5 et 6, on retrouve respectivement l'élément frontal d'appui 31 avant le choc, puis après le choc. Sur la figure 5, cet élément frontal d'appui 31 a la même forme que sur la figure 4, et les membres inférieurs 29 de l'occupant sont encore situés à distance de ce barreau.

Sur la figure 6 par contre, les genoux 29a, 29b sont écartés, situés de part et d'autre du renflement 43 (qui les a guidé) et l'élément d'appui 31 s'est déformé, en créant deux berceaux 45a, 45b (voir également figure 3 pour le berceau 45a), entre le renflement 43 et les zones latérales 35a, 37a, qui figurent la liaison rigide entre le barreau frontal 43 et les poutres d'absorption d'énergie 35, 37.

Sur la figure 6, on aura noté l'inclinaison α qui atteste de la déformation du barreau frontal 43 ainsi que des zones de liaison 35a, 37a : les poutres 35, 37 se sont donc vrillées près de leur extrémité supérieure en même temps qu'elles s'articulent dans des plans sensiblement verticaux, à leur partie inférieure.

Sur les figures 5 et 6, on peut également noter que tant avant qu'après le choc, les membres inférieurs 29 de l'occupant situés face au dispositif de protection 30 sont situés entre les deux axes 47a, 47b qui en l'espèce passent par les zones de fixation 35a, 37a, et qui, plus généralement, définissent l'axe principal d'application de l'effort symbolisé par F. Ces axes, qui bien entendu sont parallèles à la direction de l'effort F, sont parallèles à l'axe longitudinal 3 du véhicule, étant toutefois précisé que dans l'invention, on peut atteindre un décalage angulaire β dans l'orientation de l'effort F et donc dans l'orientation des axes 47a, 47b pouvant atteindre 30° de part et d'autre de l'axe 3.

Les axes 47a, 47b symbolisent chacun l'axe selon lequel s'applique la résultante de l'effort F à l'endroit de chacun des deux éléments absorbeurs d'énergie associés à l'élément d'appui frontal et définis en l'espèce par les poutres 35, 37.

Pour s'assurer d'un bon positionnement des membres inférieurs 29 par rapport à ces deux axes 47a, 47b, l'invention prévoit une distance d₁ entre ces axes supérieure à environ 240 mm, à 10 % près. Ceci est favorable à un déplacement contrôlé des membres inférieurs 29 pendant le choc et à la formation de leurs berceaux de réception 45a, 45b, évitant ainsi que ces membres aient tendance à trop s'écarter, risquant alors de placer l'occupant dans une position dangereuse.

Sur la figure 7, on retrouve les deux poutres 35, 37 d'absorption d'énergie ainsi que l'élément frontal d'appui 31 avec sa partie centrale incurvée 43.

Dans ce cas, cette partie centrale incurvée est affaiblie sur son côté arrière en 49, de manière que le renflement 43 fléchisse lors de l'absorption de l'effort et notamment dans le cas où le fléchissement des poutres 35, 37 entraînerait un contact entre l'élément frontal d'appui 31 et la colonne de direction : l'affaiblissement mécanique 49 permet alors à l'élément frontal d'appui 31 de "s'enrouler" autour de la colonne de direction sans qu'un point dur trop résistant affecte les jambes 29 de l'occupant.

Sur la figure 7 on notera également l'échancrure à la partie inférieure des poutres 35, 37 qui permet l'articulation nécessaire à l'absorption de l'effort, notamment autour de l'axe 41, pour la poutre 35.

On notera encore que l'élément frontal d'appui 31, qui se présente à nouveau ici sous la forme d'une poutre creuse, s'étend latéralement, en 31a, 31b, au delà des deux éléments absorbeurs d'énergie 35, 37, et donc au delà des axes 47a, 47b.

Il est à noter que les prolongements latéraux 31 a, 31 b permettent au dispositif 30 de conserver son efficacité et un contrôle du déplacement des jambes de l'occupant, même si celles-ci tendent à s'écarter latéralement, au delà des axes 47a, 47b.

Ces prolongements latéraux ont également un intérêt dans l'hypothèse où se resserrerait l'écartement entre les deux éléments absorbeurs d'énergie tels que 35, 37 qu'il s'agisse de poutres ou d'autres éléments tels par exemple que la structure en nids d'abeilles des figures 8 à 10.

On notera également qu'en particulier dans le cas où l'élément d'appui frontal 31 est mécaniquement affaibli entre les deux éléments latéraux absorbeurs d'énergie, on pourra avoir avantage à contrôler la déformation de ces éléments absorbeurs d'énergie par exemple par une torsion à l'endroit des zones 45a, 45b, de sorte que l'élément frontal d'appui 31 soit plus plat après absorption de l'effort, qu'avant le choc. Pour obtenir cet effet, une autre solution pourrait consister à assurer un possible coulissement de l'élément frontal d'appui 31 (en particulier s'il s'agit d'un barreau ou d'une poutre) suivant la direction générale 33, des brides (non représentées) pouvant être à cet effet prévues à l'endroit de l'extrémité de liaison des poutres 35, 37 avec l'élément 31. Ainsi, la sur-longueur centrale de cet élément créée par son aplatissement lors du choc conduirait à son coulissement dans lesdites brides, à gauche et à droite.

Sur les figures 8 et 9, on voit successivement (plus schématiquement sur la figure 9) une autre solution proposée dans l'invention pour assurer la sécurité passive recherchée.

Dans ce cas, on retrouve le barreau frontal d'appui 31 avec son renflement 43 face à la colonne de direction 15, les poutres latérales d'absorption d'énergie (seule la poutre 35 apparaît) liées de façon articulée aux bras 37, 39 de liaison à la poutre transversale 7. En 29 sont également toujours figurés les membres inférieurs de l'occupant (en l'espèce du conducteur).

Une particularité notable de cette solution est la présence des structures alvéolaires (ou en nids d'abeilles) 51, 53 disposées de part et d'autre de la colonne de direction 15 pour absorber l'énergie lors du choc.

A cet égard, on notera que ces structures alvéolaires 51, 53 pourraient être utilisées seules, sans les barres et poutres 35, 37, 39, une fixation de l'élément frontal d'appui 31 à la paroi des cellules des plus frontales, telles qu'en 51 a et 53a sur la figure 8, pouvant être prévue.

Comme on le voit plus distinctement sur cette figure 8, chaque structure alvéolaire 51, 53 est définie par des cellules allongées tubulaires (creuses) s'étendant parallèlement les unes aux autres et dans la direction générale 33, c'est-à-dire donc perpendiculairement à l'axe longitudinal 3 d'avance du véhicule, ou autrement dit parallèlement à la direction principale d'allongement de l'élément frontal d'appui 31.

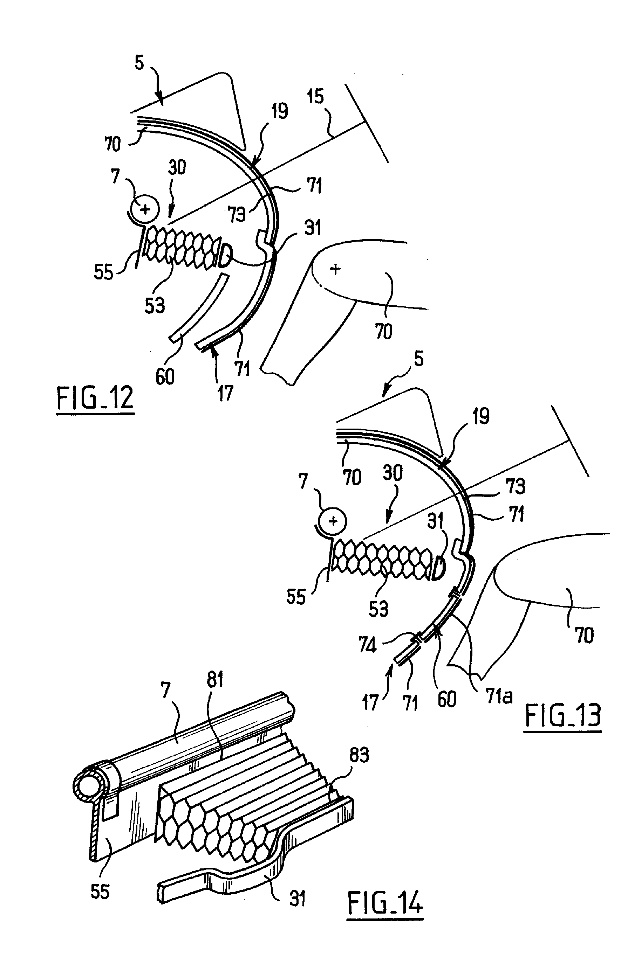

Dans l'illustration de la figure 8, on trouve bien deux ensembles de structures d'absorption d'énergie en nids d'abeilles dissociées l'une de l'autre, chacune en appui à l'arrière sur un moyen de blocage (tel qu'une plaque rigide résistante mécaniquement) schématisé en 55 sur les figures 12 à 14 et fixé à la traverse 7 pour l'appui arrière des structures alvéolaires. Toutefois, on pourrait éventuellement prévoir que ces deux structures latérales 51, 53 soient reliées entre elles frontalement (non représenté) par une portion intermédiaire également à structure alvéolaire (prolongement parallèlement à la direction 33 des alvéoles les plus frontales), de manière à obtenir alors un ensemble structurel en nids d'abeilles ayant sensiblement la forme d'un «U» à peu près horizontal.

Cette liaison frontale, face à l'occupant, des deux éléments latéraux absorbeurs d'énergie serait favorable à la stabilité en cours de déformation et assurerait une retenue complémentaire lors du choc en zone centrale, face à la colonne de direction.

Sur les figures 9 et 10, on a schématisé la déformation notamment des structures alvéolaires lors d'un choc suivant l'axe 3.

On remarque ainsi sur la figure 10 que l'élément frontal d'appui 31 est remonté, pendant le choc, au dessus du niveau du genou 29a figuré de l'occupant, tandis que les alvéoles de la structure 53 illustrée se sont écrasées et ont en quelque sorte maintenant une orientation quasiment horizontales, tandis qu'elles étaient inclinées à environ 30° sur la figure 9, avant le choc.

On aura également noté l'articulation en 41 de la poutre d'absorption d'énergie 35.

Au vu en particulier des figures 2, 3, 8, 9 et 10, on constatera que le système d'absorption d'énergie qui vient d'être présenté est tout particulièrement destiné à être disposé en face des genoux de l'occupant du véhicule, en particulier si cet occupant est le conducteur.

Toutefois, en revenant sur les figures 2 et 3, on remarquera qu'en plus d'une protection des genoux, le dispositif de l'invention peut comprendre un système complémentaire repéré dans son ensemble 60 destiné à protéger les tibias. Il est systématiquement bien entendu disposé plus bas que l'élément d'appui frontal 31

Sur les figures 2 et 3, ce système est schématisé par une poutre transversale, déformable sous l'effort F pour absorber une partie de l'énergie du choc et qui peut renforcer localement et mécaniquement la planche de bord.

Compte tenu des contraintes susceptibles d'être supportées par les tibias lors d'un choc, on conseille au demeurant que le système de protection 60 comprenne un élément additionnel d'appui se présentant comme une plaque offrant une surface d'appui pour les membres inférieurs plus importante que le premier élément d'appui frontal 31, ainsi que le montre la figure 11 sur laquelle l'élément de protection des tibias consiste en une plaque 61.

Cette plaque qui s'étend globalement suivant un plan perpendiculaire à l'axe 3 peut être cintrée avec une légère convexité dirigée vers l'occupant. Elle a avantageusement la forme d'un «U» pour être associée à la planche de bord.

Face à l'occupant, elle présente en outre avantageusement une succession de caissons 63 et/ou une série de nervures 65 se dressant perpendiculairement au plan général dans lequel elle s'étend.

Ces nervures 65 constituent des parois intégrées, déformables, qui sont dirigées sensiblement parallèlement à la direction d'application de l'effort F et qui, en se déformant sous cet effort, vont donc absorber une partie au moins de l'énergie développée par celui-ci lors du choc.

De préférence, la plaque 61 sera réalisée en matière plastique avec une raideur adaptée pour assurer une charge sur les tibias plus limitée que ne le ferait une barre.

A noter qu'en associant les deux éléments d'appui frontaux 31 et 60, en particulier dans le cas où le premier élément d'appui frontal 31 est un barreau (tout particulièrement une poutre tubulaire) et que le second élément d'appui frontal 60 est une plaque intégrant les éléments absorbeurs d'énergie 63, 65, on va pouvoir optimiser la manière d'assurer la sécurité passive des membres inférieurs de l'occupant. A cet égard, un dimensionnement des premier et second éléments frontaux d'appui 31, 60 tel que l'élément additionnel 60 d'appui pour les tibias absorbe environ entre 1/8ème et 1/3 de l'effort absorbé par le premier élément 31 d'appui pour les genoux (et sa structure d'absorption d'énergie associée) est fortement conseillé. A cet égard, pour environ 700 Joules à absorber lors d'un choc, la répartition sera de préférence alors réalisée comme suit : environ 5,5 à 6 kN pour les genoux (élément frontal d'appui 31 adossé à ses éléments latéraux absorbeurs d'énergie) et d'environ 1 à 1,5 kN pour les tibias (plaque d'appui 60 avec sa structure intégrée d'absorption d'énergie 63, 65).

Sur les figures 12 et 13, deux possibilités préférées de montage du dispositif de protection 10 ont été figurées.

Dans le cas de la figure 12, l'élément additionnel 60 absorbeur d'énergie disposé face aux tibias de l'occupant 70 est situé derrière la structure de la planche de bord 5, tandis que dans le cas de la figure 13, l'élément additionnel 60 est situé au niveau de la structure de la planche de bord à laquelle il est structurellement intégré.

Sur chaque figure, on retrouve le corps inférieur de planche de bord 17, la coiffe 19, la traverse de rigidification 7, la colonne de direction 15 et le dispositif d'absorption d'énergie 30 situé face aux genoux de l'occupant 70, avec son élément frontal d'appui 31 derrière lequel s'étend la structure d'absorption d'énergie constituée ici par les alvéoles tubulaires transversales déjà détaillées en référence aux figures 8 à 10 et dont l'un des ensembles 53 a été ici représenté, avant que le choc ait eu lieu.

L'ensemble amortisseur 30 pour les genoux est disposé derrière la structure de la planche de bord avec, sous l'élément frontal d'appui 31, la plaque d'absorption d'effort pour les tibias 60, laquelle est donc disposée sensiblement verticalement, les deux pièces 31, 60 étant situées sensiblement dans le prolongement l'une de l'autre.

La fixation de l'élément additionnel d'absorption d'énergie 60 peut être réalisée comme illustré sur les figures 2 et 3, c'est-à-dire par l'intermédiaire de flasques latéraux 63', 65' fixés en partie supérieure à la traverse 7.

Sur chacune des figures 12 et 13, on peut également constater que la planche de bord 5 comprend structurellement, pour sa constitution, au moins une couche 70 de matière plastique rigide de structuration, qui peut être revêtue d'une couche d'habillage 71 sur sa face extérieure dirigée vers l'habitacle 13, avec éventuellement interposition d'une couche intermédiaire de mousse plastique expansible 73.

Ainsi, sur la figure 13, on constate que la couche arrière en plastique rigide 70 présente localement, sous la colonne de direction 15, une large ouverture à l'endroit de laquelle a été mise en place la plaque d'absorption d'énergie 60 qui est donc dans ce cas intégrée à la planche de bord et la renforce mécaniquement. Sa fixation à la couche plastique rigide 70 peut être réalisée par des pattes de fixation 74, ou tout autre moyen de fixation approprié permettant de maintenir la plaque 60 en position. Eventuellement, les alvéoles dessinées par le quadrillage frontal de la plaque peuvent être remplies de mousse, le tout étant recouvert par la couche d'habillage 71 a qui peut consister en une très fine couche de matière plastique de préférence séparée de la couche 71 qui habille par ailleurs la planche de bord.

Dans un cas de figure non illustré, on pourrait également imaginer que le premier élément d'appui frontal 31 soit disposé à travers l'ouverture 15a de la planche de bord (voir figure 1) et ne soit donc alors pas disposé derrière la planche de bord, bien qu'en étant dissocié structurellement. Eventuellement même, l'élément 31 pourrait apparaître à la vue de l'occupant à travers une ouverture telle que l'ouverture 15a de la planche de bord.

Sur la figure 14, les éléments latéraux absorbeurs d'énergie associés à l'élément 31 (seul l'un a été illustré) consistent chacun en une structure alvéolaire 80 ayant une base dorsale 81 proche de la traverse 7 (plaque d'appui 55) de plus grande section que la base frontale 83 où s'appuie l'élément 31, ceci toujours pour favoriser la stabilité et le contrôle des mouvements lors du choc.

Eventuellement, l'élément d'appui frontal pourrait être dépourvu de renflement « central », ce dernier étant alors, si nécessaire, reporté sur une pièce annexe, comme par exemple la colonne de direction qui pourrait alors présenter un cône de guidage des genoux situé face à une ouverture que pourrait présenter l'élément d'appui frontal (alors de préférence en forme de plaque) et dans laquelle s'engagerait le cône lors du choc

On pourrait même imaginer de réaliser en au moins deux pièces disjointes l'élément d'appui frontal, même si la liaison qu'il assure frontalement entre les éléments latéraux absorbeurs d'énergie est conseillée.

## Revendications

1. Dispositif pour protéger les membres inférieurs d'un occupant de véhicule automobile, en cas d'effort exercé sur ces membres suivant une direction principale (3) d'application de l'effort, le dispositif comprenant une structure d'absorption d'énergie présentant deux éléments (35,37 ;51,53) absorbeurs d'énergie par déplacement, se déformant sensiblement suivant la direction principale d'application de l'effort pour absorber son énergie, les deux éléments absorbeurs d'énergie étant écartés l'un de l'autre perpendiculairement à la direction principale d'application de l'effort et présentant chacun frontalement une première extrémité proche de l'occupant, face à laquelle s'étend une partie d'au moins un élément d'appui frontal (31) s'étendant transversalement à la direction principale d'application de l'effort, cet élément d'appui frontal présentant, ou coopérant avec, un renflement (43) qui est convexe vers l'occupant, au moins en l'absence d'effort exercé, le renflement étant situé entre les deux éléments absorbeurs d'énergie, pour obliger les membres inférieurs de l'occupant à présenter entre eux un écartement minimum lors de la déformation de la structure d'absorption d'énergie.

2. Dispositif selon la revendication 1, **caractérisé en ce que** les deux éléments absorbeurs d'énergie (35,37 ;51,53 ;80) présentent chacun un axe principal de poussée (47a,47b) dirigé sensiblement parallèlement à la direction principale d'application de l'effort, la distance séparant ces deux axes étant supérieure à environ 240 mm.

3. Dispositif selon la revendication 1 ou la revendication 2, **caractérisé en ce que** l'élément d'appui frontal (31) relie entre eux les deux éléments absorbeurs d'énergie et est mécaniquement affaibli (49) entre les deux éléments absorbeurs, pour plier à cet endroit lors de l'application de l'effort sur lui.

4. Dispositif selon la revendication 1 ou les revendications 1 et 3, **caractérisé en ce que** l'élément d'appui frontal (31) relie entre eux les deux éléments absorbeurs d'énergie (35,37 ;51,53) et, sous l'effort, cet élément d'appui frontal se déforme et/ou s'articule à l'endroit des éléments absorbeurs d'énergie, alors que ces derniers se déforment eux-mêmes, pour créer entre les deux éléments absorbeurs d'énergie et de part et d'autre du renflement deux berceaux (45a,45b) pour y recevoir alors une partie des membres inférieurs (29) de l'occupant.

5. Dispositif selon la revendication 2 ou les revendications 2 et 3, **caractérisé en ce que** l'élément d'appui frontal (31) relie entre eux les deux éléments absorbeurs d'énergie (35,37 ;51,53 ;80) et la résistance mécanique à la déformation de la structure d'absorption d'énergie est moindre dans deux zones situées de part et d'autre du renflement et entre les deux éléments absorbeurs d'énergie, de manière que, sous l'effort, cet élément d'appui frontal se déforme et/ou s'articule sensiblement à l'endroit des axes principaux de poussée, alors que les éléments absorbeurs d'énergie se déforment eux-mêmes, pour créer entre les deux axes principaux de poussée deux berceaux (45a,45b) pour y recevoir alors une partie des membres inférieurs de l'occupant.

6. Dispositif selon la revendication 1 ou les revendications 1 et 2, **caractérisé en ce que** l'élément d'appui frontal relie entre eux les deux éléments absorbeurs d'énergie (35,37 ;51,53 ;80), est métallique, déformable et est déformé pendant l'effort, de telle sorte qu'il est plus plat après l'effort qu'avant l'effort.

7. Dispositif selon l'une quelconque des revendications précédentes, **caractérisé en ce que**, transversalement, l'élément d'appui frontal (31) s'étend au-delà des éléments absorbeurs d'énergie.

8. Dispositif selon l'une quelconque des revendications précédentes, **caractérisé en ce que** la structure d'absorption d'énergie comprend au moins une structure en nids d'abeilles(51,53) définissant des cellules allongées s'étendant parallèlement les unes aux autres et dans une direction (33) transversale à la direction principale d'application de l'effort.

9. Dispositif selon l'une quelconque des revendications précédentes, **caractérisé en ce que** l'un au moins des éléments absorbeurs d'énergie (80) présente une première base frontale de section inférieure à une seconde base dorsale, la première base frontale faisant face aux membres de l'occupant du véhicule, la seconde base dorsale étant située à l'opposé.

10. Dispositif selon l'une quelconque des revendications précédentes, **caractérisé en ce que**:
- l'élément d'appui frontal est situé sensiblement face aux genoux de l'occupant, et
- le dispositif comprend en outre un élément additionnel d'appui frontal s'étendant plus bas que le premier élément d'appui frontal, face aux tibias de l'occupant.

11. Dispositif selon la revendication 10, **caractérisé en ce que** le premier élément d'appui frontal se présente comme une poutre creuse ou une barre et l'élément additionnel d'appui frontal se présente comme une plaque, de sorte que l'élément additionnel d'appui frontal présente une surface d'appui pour les membres inférieurs plus importante que le premier élément d'appui.

12. Dispositif selon la revendication 10 ou la revendication 11, **caractérisé en ce que** les premier et second éléments d'appui frontaux et les éléments (35,37; 51,53) absorbeurs d'énergie sont dimensionnés pour que le premier élément d'appui frontal et les éléments absorbeurs d'énergie absorbent, lors de l'application de l'effort, entre environ trois et huit fois l'effort absorbé par l'élément additionnel d'appui frontal.

13. Véhicule automobile comprenant:
- une planche de bord (5) comprenant au moins une couche (70) en matière plastique,
- une colonne de direction (15),
- un dispositif selon l'une quelconque des revendications 1 à 12, **caractérisé en ce que** l'élément d'appui frontal (31), qui intègre le renflement (43), est situé sensiblement face aux genoux de l'occupant avec le renflement situé en face de la colonne de direction.

14. Véhicule selon la revendication 13, **caractérisé en ce que** l'élément d'appui frontal (31) est distinct de la (des) couche(s) de la planche de bord et est situé derrière elle(s) par rapport à l'occupant, dans l'environnement de la colonne de direction.

15. Véhicule selon la revendication 13 **caractérisé en ce qu'**à l'arrière, à une seconde extrémité plus éloignée de l'occupant que la première, au moins avant que l'effort n'ait été exercé, les deux éléments absorbeurs d'énergie (35,37; 51,53) sont reliés à une barre transversale (7) de structuration du véhicule qui s'étend transversalement à la direction principale (3) d'application de l'effort et qui est mécaniquement plus résistante à la flexion que l'élément d'appui frontal (31).

16. Véhicule selon la revendication 13, **caractérisé en ce que** le dispositif de protection des membres inférieurs comprend un élément additionnel d'appui frontal (60) s'étendant plus bas que le premier élément d'appui frontal (31), face aux tibias de l'occupant, ce élément additionnel d'appui frontal renforçant localement mécaniquement la planche de bord (5).

17. Véhicule selon la revendication 16, **caractérisé en ce que** l'élément additionnel d'appui frontal (60) intègre des parois déformables (65) orientées sensiblement parallèlement à la direction principale (3) d'application de l'effort, et qui, en se déformant sous l'effort, absorbe une partie au moins de l'énergie développée par celui-ci.

18. Véhicule selon la revendication 16 ou la revendication 17, **caractérisé en ce que** l'élément additionnel d'appui frontal (60) se présente comme une plaque située, perpendiculairement la direction principale d'application de l'effort, au niveau de la planche de bord ou derrière elle par rapport à l'occupant, et, en hauteur, sous le premier élément d'appui frontal (31) et en dessous du niveau où sont situés les éléments absorbeurs d'énergie (35,37; 51,53).

19. Véhicule selon la revendication 13, **caractérisé en ce que** les deux éléments absorbeurs d'énergie comprennent chacun une poutre (35,37) liée à une première extrémité supérieure à l'élément d'appui frontal (31) et articulée, à une seconde extrémité inférieure, transversalement à la direction d'application de l'effort et, sensiblement horizontalement, à une bride de fixation (39,40) fixée rigidement à une traverse (7) de renfort mécanique de la planche de bord à laquelle la planche de bord est fixée et qui s'étend à l'intérieur du véhicule, sensiblement parallèlement à l'élément d'appui frontal et entre les piliers A (9a,9b) de ce véhicule.
